(19) Europäisches Patentamt / European Patent Office / Office européen des brevets

(11) **EP 1 061 109 B1**

(12) **EUROPEAN PATENT SPECIFICATION**

(45) Date of publication and mention of the grant of the patent:
**05.01.2011 Bulletin 2011/01**

(51) Int Cl.:
***C09J 175/16*** *(2006.01)* ***C09J 7/02*** *(2006.01)*

(21) Application number: **00112596.2**

(22) Date of filing: **14.06.2000**

(54) **Re-release type adhesive and re-release type adhesive sheet**

Wiederablösbarer Klebstoff und wiederablösbare Klebefolie

Adhésif à décollement et feuille adhésif à décollement

(84) Designated Contracting States:
**DE FR GB IT NL**

(30) Priority: **14.06.1999 JP 16755399**

(43) Date of publication of application:
**20.12.2000 Bulletin 2000/51**

(73) Proprietor: **NITTO DENKO CORPORATION**
**Osaka (JP)**

(72) Inventors:
- **Hashimoto, Kouichi, c/o Nitto Denko Corporation Ibaraki-shi, Osaka (JP)**
- **Fukuoka, Takahiro, c/o Nitto Denko Corporation Ibaraki-shi, Osaka (JP)**
- **Akazawa, Koji, c/o Nitto Denko Corporation Ibaraki-shi, Osaka (JP)**
- **Nakagawa, Yoshio, c/o Nitto Denko Corporation Ibaraki-shi, Osaka (JP)**
- **Kubozono, Tatsuya, c/o Nitto Denko Corporation Ibaraki-shi, Osaka (JP)**

(74) Representative: **Grünecker, Kinkeldey, Stockmair & Schwanhäusser Anwaltssozietät Leopoldstrasse 4 80802 München (DE)**

(56) References cited:
**EP-A- 0 298 448** **US-A- 5 149 586**
**US-A- 5 281 473**

- **PATENT ABSTRACTS OF JAPAN vol. 1998, no. 03, 27 February 1998 (1998-02-27) & JP 09 298173 A (LINTEC CORP), 18 November 1997 (1997-11-18)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 061 109 B1

## Description

### FIELD OF THE INVENTION

The present invention relates to a re-release type adhesive which can be used as a protective sheet for protecting the surface of a semiconductor wafer at the grinding step of grinding the back surface of the wafer among various steps for the preparation of semiconductor, or as a dicing adhesive tape for sticking to the back surface of a wafer at the pick-up dicing step of automatically collecting element chips obtained by cutting and separating a semiconductor wafer, and a re-release type adhesive to be used as an adhesive layer of the re-release type adhesive sheet.

### BACKGROUND OF THE INVENTION

In recent years, there has been a growing tendency toward the increase of the size of semiconductor wafer and the reduction of the thickness of wafer for IC card. In order to satisfy the requirements for ease of peeling the protective tape for working the wafer, there have been used more radiation-curing protective sheets. The radiation-curing protective sheet can be easily peeled but is disadvantageous in that when irradiated with radiation, the adhesive itself undergoes shrinkage to produce a shrinkage force that causes the wafer to be warped, making it difficult for the wafer to be conveyed at the production process.

The radiation-curing protective sheet also gives a problem at so-called dicing step for picking up semiconductor elements which have been cut and separated. In other words, when an adhesive sheet made of an adhesive which is liable to great volume shrinkage is used, the sheet cannot be sufficiently expanded, making it impossible to expand the dicing street and hence causing troubles in picking up the semiconductor elements.

In general, a radiation-curing adhesive is prepared by using a high molecular weight compound called base polymer (main polymer), a radiation-polymerizable compound (radiation-reactive oligomer, etc.) having a weight-average molecular weight of 20,000 or less and a carbon-carbon double bond in its molecule and a radiation polymerization initiator as essential components, and appropriately added various additives such as crosslinking agent thereto. In order to provide the adhesive with characteristics that the adhesion is greatly lowered after irradiation with radiation, a so-called polyfunctional compound having two or more carbon-carbon double bonds per molecule is widely used as the radiation-polymerizable compound. When such a radiation-curing adhesive is irradiated with radiation, the radiation-polymerizable compound undergoes reaction to form a three-dimensional network structure rapidly, causing the entire adhesive to react and harden rapidly and show a drop of adhesion. These techniques are disclosed in, for example, JP-A-5-32946 (The term "JP-A" as used herein means an "unexamined published Japanese patent application"), JP-A-8-20756, JP-A-9-186121, JP-A-9-298173 and JP-A-11-26406. However, this reaction/ curing is accompanied by great volume shrinkage of the adhesive that causes the development of shrinkage stress resulting in the above-described disadvantages.

It can be proposed that a radiation-polymerizable compound having as few functional groups as possible be used to overcome these disadvantages. However, this approach is disadvantageous in that the resulting adhesive cannot show a sufficient drop of adhesion after irradiation with radiation and thus loses inherent performances of an adhesive.

The following method is proposed as a method for reducing the shrinkage force developed by curing reaction caused by irradiation with radiation: a method of decreasing the amount of the radiation-reactive oligomer to the main polymer; specifically, a method which comprises mixing about 10 to 40 parts by weight of the radiation-reactive oligomer with 100 parts by weight of the main polymer. In this method, it is proper that an oligomer which allows sufficient drop of adhesion even when used in a small amount, e.g., polyfunctional oligomer having 6 or more unsaturated bonds, be selected. In order to maintain a desired adhesion before irradiation with radiation, it is preferred that an acrylic acid ester copolymer having a low elastic modulus be selected as a main polymer. Another possible method for reducing the shrinkage force is a method which involves the selection of a compound having 1 to 4 unsaturated bonds per molecule which undergoes low shrinkage as a radiation-reactive oligomer while mixing about 30 to 300 parts by weight of the radiation-reactive oligomer with 100 parts by weight of the main polymer. In this case, it is preferred that an oligomer which undergoes low shrinkage but shows a reduced adhesion be selected. Further, a method is proposed which comprises mixing a mixture of about 20 to 300 parts by weight of a polyfunctional oligomer having 6 or more unsaturated bonds and a low-functional oligomer having from 1 to 4 unsaturated bonds per molecule with 100 parts by weight of the main polymer. US 5,149,586 relates to a radiation-curable adhesive tape comprising a radiation-curable adhesive layer.

However, according to the inventors' studies, it has been found difficult in all the above approaches to satisfy both the two requirements for sufficient drop of adhesion and low shrinkage force of adhesive at the same time. One of the reasons for the above difficulty is that complete compatibility is made difficult in such a system having a main polymer and a radiation-reactive oligomer in admixture. In order to accomplish sufficient drop of adhesion, excess amount of oligomer is required. When excess amount of oligomer is used, a high shrinkage force is developed.

SUMMARY OF THE INVENTION

It is therefore an object of the present invention to provide a re-release type adhesive and re-release type adhesive sheet which, when subjected to curing reaction caused by irradiation with radiation, show a sufficient drop of adhesion and can cause the adherend to be warped to a minimized extent under the application of the resulting shrinkage force.

It is another object of the present invention to provide a re-release type adhesive and re-release type adhesive sheet which show a sufficient drop of adhesion when subjected to curing reaction caused by irradiation with radiation and can be maintained flexible to an extent such that it can be somewhat expanded even after curing.

These and other objects of the present invention will become apparent from the following detailed description and examples. The object of the present invention is solved on the basis of claims 1 to 3.

As a result of extensive studies to overcome the above problems, it was found that when the shrinkage force developed by curing reaction of an adhesive mainly comprising a radiation-reactive polymer having an intramolecular side chain having a specific structure is maintained falling within a predetermined range, the adhesion can be sufficiently lowered when irradiated with radiation and the warpage of the adherend can be prevented. The present invention has been completed based on this finding.

The present invention provides a re-release type adhesive comprising as a main component a radiation-reactive polymer having a side chain having a chain length of 6 or more in terms of the number of atoms and one carbon-carbon double bond per side chain, said re-release type adhesive showing a shrinkage force of 30 MPa or less as developed by curing reaction caused by irradiation with radiation.

The re-release type adhesive may further comprise a radiation-reactive oligomer incorporated therein in an amount of from 0. 1 to 150 parts by weight based on 100 parts by weight of the radiation-reactive polymer.

It is another object of the present invention to provide a re-release type adhesive sheet comprising an adhesive layer comprising a substrate film and the re-release type adhesive provided on one surface thereof.

The term "shrinkage force" as used herein means the shrinkage force of the radiation-cured adhesive alone measured by means of a cantilever beam (force produced when the adhesive undergoes shrinkage by irradiation with radiation). The shrinkage force is measured by the following method.

As shown in Fig. 1, an adhesive layer B as a sample is adhered to a phosphor bronze plate A (length: 200 mm; width: 20 mm; thickness: 200 μm; JIS C 5210). The plate is then placed horizontally with its length fixed at one end thereof. Thereafter, the sample is irradiated with ultraviolet rays on the adhesive layer B side thereof for 60 seconds (ultraviolet radiator (example): NEL UM-110, produced by Nitto Seiki K.K.), and then returned to ordinary temperature where the vertical displacement δ from the initial position is then measured. The shrinkage force is then calculated from the measurements by the following equations (1 Kg/mm$^2$ = 9.8 MPa).

$$\rho = (L^2/8\delta) + \delta/2 \fallingdotseq (L^2/8\delta)$$

$$\sigma = (E_1 h_1^3/12h_2) \times 2/\rho\ (h_1 + h_2) \times \{1 + (h_1/(h_1 + h_2)^2/3)\}$$

p: Radius of curvature of cantilever (mm)
σ: Internal stress (shrinkage force) (Kg/mm$^2$)
$E_1$: Young's modulus of phosphor bronze plate (Kg/mm$^2$) $h_1$: Thickness of phosphor bronze plate (mm)
$h_2$: Thickness of adhesive layer (mm)
L/2: Distance between support and point of measurement (mm)
δ: Displacement of specimen (mm)

The term "length of side chain in polymer molecule (chain length)" as used herein means the number of atoms other than hydrogen such that the number of bonding of these atoms (e.g., atom such as carbon, oxygen and nitrogen or atom which can be bonded to two or more atomic groups) is maximum. For example, the length of side chain in a polymer represented by the following formula is 13.

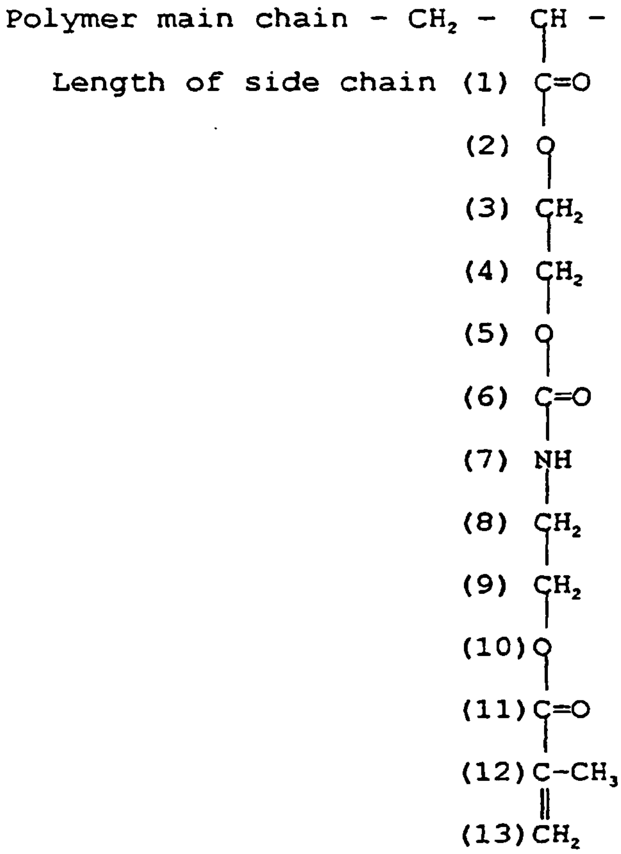


## BRIEF DESCRIPTION OF THE DRAWINGS

By way of example and to make the description more clear, reference is made to the accompanying drawings in which:

Fig. 1 is a diagram showing a method for measuring the shrinkage force developed by the irradiation of adhesive layer with radiation; and
Fig. 2 is a diagram showing a method for measuring the warpage of wafer wherein the symbol A indicates a phosphor bronze plate, the symbol B indicates an adhesive layer, the reference numeral 1 indicates a wafer, and the reference numeral 2 indicates a protective sheet.

## DETAILED DESCRIPTION OF THE INVENTION

The radiation-reactive polymer of the present invention has a side chain having one carbon-carbon double bond (radiation-reactive double bond) and a chain length of 6 or more (e.g., from about 6 to 30) in terms of number of atoms in its molecule.
A material having a carbon-carbon double bond in its polymer molecule has already been known. To date, as its characteristics there have been noted only radiation curing properties. In order to satisfy the requirements for low shrinkage force as well, it is necessary that there be a side chain having a chain length of 6 or more in terms of number of atoms and one carbon-carbon double bond per side chain in the molecule of the polymer. When the length of side chain in the polymer molecule falls below 6 in terms of number of atoms, the polymer which has undergone radiation curing reaction becomes rigid and thus shows a large shrinkage force. Further, when there are two or more carbon-carbon double bonds (number of so-called functional groups in the radiation-reactive polymer) per side chain in the polymer molecule, excess three-dimensional network structure is formed by radiation curing reaction. After curing, the polymer molecule becomes rigid and thus shows a large shrinkage force.
The radiation with which the polymer is irradiated is not specifically limited so far as it can cure the polymer. Examples of the radiation that can be used include X-rays, ultraviolet rays, and electron rays.
The polymer used can be any polymer if it exhibits adhesion. From the standpoint of ease of designing molecule,

acrylic polymers are preferred.

The acrylic polymer used can be one containing as monomer components one or more of (meth) acrylic acid alkyl esters (e.g., $C_{1-30}$, particularly $C_{4-18}$ straight-chain or branched alkylester such as methyl ester, ethyl ester, propyl ester, isopropyl ester, butyl ester, isobutyl ester, s-butyl ester, t-butyl ester, pentyl ester, isopentyl ester, hexyl ester, heptyl ester, octyl ester, 2-ethylhexyl ester, isooctyl ester, nonyl ester, isononyl, decyl ester, isodecyl ester, undecyl ester, dodecyl ester, tridecyl ester, tetradecyl ester, hexadecyl ester, octadecyl ester and eicosyl ester) and (meth)acrylic acid cycloalkyl esters (e.g., cyclopentyl ester and cyclohexyl ester) .

The acrylic polymer may further comprise as comonomer units other monomers (or oligomers) copolymerizable with the (meth) acrylic acid alkyl ester or cycloalkyl ester incorporated therein as necessary for the purpose of improving the characteristics such as cohesive force and heat resistance. Examples of such monomers (or oligomers) (unit) include carboxyl group-containing monomers such as acrylic acid, methacrylic acid, carboxyethyl acrylate, carboxypentyl acrylate, itaconic acid, maleic acid, fumaric acid and crotonic acid, acid anhydride group-containing monomers such as maleic anhydride and itaconic anhydride, hydroxyl group-containing monomers such as 2-hydroxylethyl (meth)acrylate, 2-hydroxypropyl (meth)acrylate, 4-hydroxybutyl (meth)acrylate, 6-hydroxyhexyl (meth)acrylate, 8-hydroxyoctyl (meth) acrylate, 1-hydroxydecyl (meth)acrylate, 12-hydroxylauryl (meth)acrylate, (4-hydroxymethylcyclohexyl)methyl acrylate, N-methylol (meth)acrylamide, vinyl alcohol, allyl alcohol, 2-hydroxyethyl vinyl ether, 4-hydroxybutyl vinyl ether and diethylene glycol monovinyl ether, sulfonic acid group-containing monomers such as styrenesulfonic acid, (meth)acrylamidepropanesulfonic acid, sulfopropyl (meth)acrylate and (meth)acryloyloxynaphthalenesulfonic acid, phosphoric acid group-containing monomers such as 2-hydroxyethylacryloyl phosphate, cyano group-containing monomers such as acrylonitrile, amide group-containing monomers such as acrylamide, amino group-containing monomers such as N,N-dimethylaminoethyl (meth)acrylate, epoxy group-containing monomers such as glycidyl (meth)acrylate and allylglycidyl ether, vinyl esters such as vinyl acetate, aromatic vinyl compounds such as styrene, and vinyl ethers such as vinyl ethyl ether. These monomer components may be used alone or in combination of two or more thereof.

The acrylic polymer may further comprise as a copolymerizable monomer component a polyfunctional monomer incorporated therein as necessary for the purpose of crosslinking. Examples of such polyfunctional monomers include hexanediol di(meth)acrylate, (poly)ethyleneglycol di(meth)acrylate, (poly)propyleneglycol di(meth)acrylate, neopentylglycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, and urethane acrylate. One or more of these polyfunctional monomers may be used. The amount of the polyfunctional monomers to be used is preferably 30% by weight or less based on the total weight of the monomers from the standpoint of adhesion.

The acrylic polymer can be obtained by subjecting a single monomer or a mixture of two or more monomers to polymerization. The polymerization may be carried out by any of solution polymerization, emulsion polymerization, bulk polymerization and suspension polymerization.

The introduction of a side chain having one carbon-carbon double bond and a chain length of 6 or more in terms of number of atoms into such an acrylic polymer can be accomplished by various known methods. From the standpoint of ease of designation of molecule, a method is preferably used which comprises copolymerizing a monomer containing a reactive functional group a (polymerizable compound) with a comonomer to synthesize a polymer having a functional group a in its side chain, and then reacting the polymer with a compound having a functional group b reactive with the functional group a and one carbon-carbon double bond while maintaining the carbon-carbon double bond (condensation, addition reaction, etc.).

Examples of the functional group a and functional group b include carboxyl group, acid anhydride group, hydroxyl group, amino group, epoxy group, isocyanate group and aziridine group. These functional groups may be selectively used in such a combination that they react with each other. Examples of the combination of functional group a and functional group b include combination of carboxyl group and epoxy group, combination of carboxyl group and aziridine group, combination of hydroxyl group and isocyanate group and combination of carboxyl group and hydroxyl group. In these combinations, any of the two components may be a functional group a (or functional group b).

As the compound containing as a functional group a a monomer having carboxyl group, acid anhydride group, hydroxyl group, amino group or epoxy group, as a functional group b a carboxyl group, acid anhydride group, hydroxyl group, amino group or epoxy group and one carbon-carbon double bond, a compound having a corresponding functional group exemplified as a monomer constituting the acrylic polymer can be used.

Examples of the compound having as a functional group a a monomer containing an isocyanate group, as a functional group b an isocyanate group and one carbon-carbon double bond include isocyanate compound containing (meth)acryloyl group in its molecule such as methacryloyl isocyanate and 2-methacryloyloxyethyl isocyanate, and isocyanate compound containing vinyl group-containing aromatic ring in its molecule such as m-isopropenyl-$\alpha,\alpha$-dimethylbenzylisocyanate.

Particularly preferred among the above combinations of functional group a and functional group b is combination of hydroxyl group and isocyanate group. For example, a monomer mixture containing as a comonomer component a polymerizable ester compound having a hydroxyl group in its molecule such as (meth)acrylic acid hydroxyalkylester

(e.g., 2-hydroxyethyl (meth)acrylate, 2-hydroxypropyl (meth)acrylate, 4-hydroxybutyl (meth)acrylate, 6-hydroxyhexyl (meth)acrylate) or polymerizable ether compound having a hydroxyl group in its molecule such as 2-hydroxyethylvinyl ether, 4-hydroxybutylvinyl ether and diethyleneglycol monovinyl ether may be subjected to polymerization or a monomer mixture containing as a comonomer component a vinyl ester such as vinyl acetate may be subjected to polymerization followed by saponification to synthesize a polymer having a side chain containing a hydroxyl group which is then reacted with the isocyanate compound having one carbon-carbon double bond to obtain a radiation-reactive polymer according to the present invention.

Also preferred among the above combinations of functional group a and functional group b is combination of carboxyl group and epoxy group. For example, a monomer mixture containing as a comonomer component a polymerizable unsaturated carboxylic acid such as (meth)acrylic acid may be subjected to polymerization to synthesize a polymer having a side chain containing a carboxyl group which is reacted with an epoxy compound having one carbon-carbon double bond such as glycidyl (meth)acrylate to obtain a radiation-reactive polymer.

The content of the side chain having one carbon-carbon double bond and a chain length of 6 or more in terms of number of atoms in the radiation-reactive polymer depends on the kind of the monomer constituting the polymer. In general, the proportion of the monomer unit having such a side chain in all the monomer units is from about 1 to 70 mol%, preferably from about 5 to 40 mol%, more preferably from about 10 to 25 mol%.

The number average molecular weight of the radiation-reactive polymer is from about 200,000 to 3,000,000, preferably from about 250,000 to 1,500,000.

The re-release type adhesive according to the present invention generally contains a polymerization initiator. Such a polymerization initiator used can be a known or conventional polymerization initiator. Examples of the photopolymerization initiator to be contained in the case where curing is effected by irradiation with ultraviolet rays include α-ketol-based compound such as 4-(2-hydroxyethoxy)phenyl(2-hydroxy-2-propyl)ketone, α-hydroxy-α, α'-dimethylacetophenone, 2-methyl-2-hydroxypropiophenone and 1-hydroxycyclohexylphenylketone, acetophenone-based compound such as methoxyacetophenone, 2,2-dimethoxy-2 phenylacetophenone, 2,2-diethoxyacetophenone and 2-methyl-1-[4-(methylthio)-phenyl]-2-morpholinopropane-1, benzoinether-based compound such as benzoin ethyl ether, benzoin isopropyl ether and anisoin methyl ether, ketal-based compound such as benzyl dimethyl ketal, aromatic sulfonyl chloride-based compound such as 2-naphthalenesulfonyl chloride, optically active oxim-based compound such as 1-phenone-1,1-propanedione-2-(o-ethoxycarbonyl)oxim, benzophenone-based compound such as benzophenone, benzoilbenzoic acid and 3,3'-dimethyl-4-methoxybenzophenone, thioxanthone-based compound such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone and 2,4-diisopropylthioxanthone, campherquinone, halogenated ketone, acylphosphinoxide, and acylphosphonate. The amount of such a polymerization initiator used is from about 1 to 10 parts by weight based on 100 parts by weight of the radiation-reactive polymer.

The re-release type adhesive according to the present invention may further comprise additives such as radiation-reactive oligomer (radiation-curing oligomer) and crosslinking agent. The radiation-reactive oligomer that can be used is appropriately selected from various oligomers such as urethane-based oligomer, polyether-based oligomer, polyester-based oligomer, polycarbonate-based oligomer and polybutadiene-based oligomer. These radiation-reactive oligomers may be used alone or in combination of two or more thereof. When a radiation-reactive polymer capable of sufficiently exhibiting characteristics, i.e., lowering adhesion, is used, these oligomers may not be necessarily used. The amount of the radiation-reactive oligomer to be used is from about 0.1 to 150 parts by weight, preferably from about 1 to 100 parts by weight, more preferably from about 5 to 60 parts by weight, per 100 parts by weight of the radiation-reactive polymer. When the amount of the radiation-reactive oligomer to be used exceeds 150 parts by weight, the viscosity of the adhesive itself is extremely lowered, causing the adhesive to flow in the adhesive layer of the adhesive sheet and hence occasionally making it impossible to maintain the form of the adhesive sheet.

The crosslinking agent that can be used is a known or conventional crosslinking agent such as epoxy-based crosslinking agent, aziridine-based crosslinking agent and isocyanate-based crosslinking agent (e.g., polyisocyanate).

In the present invention, the shrinkage force developed by curing reaction caused by irradiation with radiation is 30 MPa or less (e.g., from about 0.01 to 30 MPa), preferably 25 MPa or less (e.g., from about 0.01 to 25 MPa). When the shrinkage force exceeds 30 MPa, the adhesive layer which has been cured by irradiation with radiation causes an adherend such as wafer to warp. Further, when cured by irradiation with radiation, an adhesive sheet having such an adhesive layer exhibits a remarkably lowered flexibility (or elasticity). Thus, such an adhesive sheet, if used as an adhesive sheet for dicing semiconductor wafer, cannot be sufficiently expanded.

The shrinkage force can be adjusted by appropriately changing the kind and introduced amount of the side chain, the molecular weight of the radiation-reactive polymer and the added amount of the radiation-reactive oligomer.

The re-release type adhesive sheet according to the present invention comprises a substrate film and an adhesive layer comprising the re-release type adhesive of the present invention provided on one surface thereof. The adhesive sheet may be prepared by, e.g., applying an adhesive composition containing the re-release type adhesive of the present invention to a substrate film, and then drying the coated material. Alternatively, the adhesive sheet may be

prepared by applying an adhesive composition containing the re-release type adhesive to an appropriate separator (e.g., release paper), drying the coated material to form an adhesive layer, and then transferring (moving) the adhesive layer to the substrate film.

The substrate film is not specifically limited. The substrate film used can be any conventional material. Examples of the substrate film used as a protective sheet for grinding wafer include plastic films such as polyester film (e.g., polyethylene terephthalate (PET) film, polybutylene terephthalate (PBT) film, polyethylene naphthalate film), polyolefin-based film (e.g., biaxially oriented polypropylene (OPP) film, low density polyethylene (PE) film, various soft polyolefin film) and ethylene-vinyl acetate copolymer (EVA) film, and multi-layer film comprising these films. Preferred among these substrate films are PET film, multi-layer film comprising PET film and OPP film, which exert an effect of inhibiting the warpage of wafer. The substrate film used as an adhesive sheet for cutting and separating wafer includes a soft polyvinyl chloride film in addition to the above various films. The thickness of the substrate film is about 20 to 300 μm.

The adhesion of the adhesive layer can appropriately be predetermined depending on the purpose of use. For example, if used for semiconductor wafer, the adhesive sheet preferably exhibits an adhesion of 100 gf/20 mm tape width or more (as determined at ordinary temperature, a peeling angle of 180° and a peeling rate of 300 mm/min) before irradiation with radiation and 40 gf/20 mm tape width or less after irradiation with radiation.

The thickness of the adhesive layer may appropriately be determined. In practice, however, it is normally from 1 μm to 300 μm, preferably from 3 μm to 200 μm, more preferably from 5 μm to 100 μm.

The shape of the adhesive sheet is not specifically limited but may appropriately be determined depending on the purpose of use. For example, if used for grinding wafer, an adhesive sheet which has been cut in the same shape as wafer is preferably used.

The re-release type adhesive sheet according to the present invention can be used as a protective sheet for protecting the surface of semiconductor wafer at the back grinding step for grinding the back surface of semiconductor wafer among the various semiconductor preparation steps. The adhesive sheet according to the present invention comprises an adhesive layer formed by an adhesive comprising as a main component a radiation-reactive polymer having a specific side chain structure and showing a shrinkage force falling within a specified range when cured by irradiation with radiation. Thus, when the adhesive sheet which has been adhered on one surface of a semiconductor wafer the other surface of which is then ground is irradiated with radiation such as ultraviolet rays, the adhesive layer of the adhesive sheet is cured to show a lowered adhesion, making it easy to peel the adhesive sheet off from the wafer. In general, when irradiated with radiation, the adhesive layer undergoes volume shrinkage to produce a shrinkage force resulting in the warpage of the wafer. However, the adhesive sheet according to the present invention exhibits a lowered shrinkage force and thus causes little warpage of the wafer even when cured by irradiation with radiation.

The re-release type adhesive sheet according to the present invention can also be used as a dicing adhesive tape for adhering to the other side of a semiconductor wafer to fix the wager at the pick-up dicing step of automatically collecting chips obtained by cutting and separating a semiconductor wafer. In the case where the adhesive sheet according to the present invention is used for such a purpose, when the adhesive sheet is irradiated with radiation after the cutting of the wafer, the adhesive layer is cured to exhibit a lowered adhesion but shows an extremely small shrinkage force and maintains an appropriate flexibility. Thus, the adhesive sheet can be sufficiently expanded, making it possible to secure a desired dicing street. Accordingly, semiconductor chips can be smoothly picked up.

In accordance with the present invention, the adhesion can be sufficiently lowered by curing reaction caused by irradiation with radiation. At the same time, the warpage of the adherend by the shrinkage force developed by the curing reaction can be reduced to a low level. Further, the adhesive sheet according to the present invention which has been cured can be maintained flexible to an extent such that it can be somewhat expanded.

The present invention will be further described in the following examples.

The conditions under which the wafer is ground on the other surface thereof, the conditions of irradiation with ultraviolet rays (UV), the conditions of expansion, etc., are as follows.

(Conditions of wafer grinding)

Grinding machine: DFG-840, produced by Disco Inc.

Wafer: 6-inch dia. (Back surface was ground such that the thickness was reduced from 600 μm to 100 μm)

Wafer laminating machine: DR-8500II (produced by Nitto Seiki K.K.)

Ultraviolet (UV) radiator: NEL UM-110 (produced by Nitto Seiki K.K.)

Integrated dose of ultraviolet rays: 500 $mJ/cm^2$

(Measurement of warpage of wafer)

For the evaluation of the warpage of the wafer thus ground and irradiated with UV, the wafer thus ground was placed on a flat place with a protective sheet adhered thereon. The distance (mm) between the end of the wafer and

the flat place was then determined.

(Wafer dicing conditions)

Dicing machine: DFD2S/8 (produced by Disco Inc.)
Dicing rate: 100 mm/sec.
Dicing blade: 2050HFDD (produced by Disco Inc.)
Rotary speed of dicing blade: 40,000 rpm
Cutting depth of dicing tape: 30 μm
Size of wafer chip: 10 mm x 10 mm
Wafer diameter: 6 inch

(Expanding conditions)

Dicing ring: 2-6-1 (produced by Disco Inc.; inner diameter: 19.5 cm)
Drawdown: 10 mm
Die bonder: CPS-100 (produced by NEC Kikai K.K.)

(Measurement of gap between chips)

The width of the kerf (dicing street) between chips developed by expanding the adhesive sheet thus diced was measured.

(Adhesion)

Measured according to JIS Z 0237.

(Shrinkage force)

Determined according to the method mentioned above (see Fig. 1).

EXAMPLE 1

A blend composition comprising 0.59 mols of ethyl acrylate, 0.59 mols of butyl acrylate and 0.26 mols of 2-hydroxyethyl acrylate was copolymerized in a toluene solution to obtain an acrylic copolymer having a number average molecular weight of 300,000. Subsequently, the copolymer thus obtained was addition reacted with 0.21 mols of 2-methacryloyloxy ethyl isocyanate to introduce carbon-carbon double bond into the side chain in the polymer molecule. The resulting side chain had a length of 13 in terms of number of atoms. Subsequently, 100 parts by weight of the polymer thus obtained were mixed with 1 part by weight of a polyisocyanate-based crosslinking agent and 3 parts by weight of an acetophenone-based photopolymerization initiator to prepare an adhesive composition.
The adhesive composition thus prepared was applied to a release-treated film to form an adhesive layer having a thickness of 30 μm. The adhesive layer thus formed was irradiated with ultraviolet rays at a dose of 500 $mJ/cm^2$, and then measured for shrinkage force.
On the other hand, the adhesive composition was applied to one surface of a polyester substrate film having a thickness of 50 μm to form an adhesive layer having a thickness of 30 μm. Thus, an adhesive sheet for grinding wafer was obtained. The adhesive sheet thus obtained was laminated with a wafer which was then ground under the above-described conditions. The laminate was irradiated with ultraviolet rays under the above-described conditions, and then measured for warpage of wafer. The adhesive sheet was also measured for adhesion of adhesive layer with respect to SUS304 steel plate before and after irradiation with ultraviolet rays.

EXAMPLE 2

A blend composition comprising 0.59 mols of ethyl acrylate, 0.59 mols of butyl acrylate and 0.26 mols of 6-hydroxyhexyl acrylate was copolymerized in a toluene solution to obtain an acrylic copolymerized polymer having a number average molecular weight of 320,000. Subsequently, the copolymer thus obtained was addition reacted with 0.21 mols of 2-methacryloyloxy ethyl isocyanate to introduce carbon-carbon double bond into the side chain in the polymer molecule. The resulting side chain had a length of 17 in terms of number of atoms. The subsequent procedures were the same as in Example 1.

EXAMPLE 3

A blend composition comprising 0.59 mols of ethyl acrylate, 0.59 mols of butyl acrylate and 0.26 mols of 2-hydroxyethyl acrylate was copolymerized in a toluene solution to obtain an acrylic copolymerized polymer having a number average molecular weight of 300,000. Subsequently, the copolymer thus obtained was addition reacted with 0.21 mols of 2-methacryloyl isocyanate to introduce carbon-carbon double bond into the side chain in the polymer molecule. The resulting side chain had a length of 10 in terms of number of atoms. The subsequent procedures were the same as in Example 1.

EXAMPLE 4

A blend composition comprising 0.59 mols of ethyl acrylate, 0.59 mols of butyl acrylate and 0.26 mols of acrylic acid was copolymerized in a toluene solution to obtain an acrylic copolymerized polymer having a number average molecular weight of 300,000. Subsequently, the copolymer thus obtained was addition reacted with 0.21 mols of glycidyl methacrylate to introduce carbon-carbon double bond into the side chain in the polymer molecule. The resulting side chain had a length of 9 in terms of number of atoms.

Subsequently, 100 parts by weight of the polymer thus obtained were mixed with 0.1 parts by weight of an epoxy-based crosslinking agent and 3 parts by weight of an acetophenone-based photopolymerization initiator to prepare an adhesive composition. The subsequent procedures were the same as in Example 1.

EXAMPLE 5

A blend composition comprising 0.59 mols of ethyl acrylate, 0.59 mols of butyl acrylate and 0.26 mols of vinyl acetate was copolymerized in a toluene solution to obtain an acrylic copolymer having a number average molecular weight of 300,000. The copolymer thus obtained was then saponified by an ordinary method to obtain a polymer having the acetyloxy group substituted by hydroxyl group. The polymer was reacted with 0.21 mols of methacryloyl isocyanate to introduce carbon-carbon double bond into the side chain in the polymer molecule. The resulting side chain had a length of 6 in terms of number of atoms. The subsequent procedures were the same as in Example 1.

EXAMPLE 6

100 Parts by weight of the radiation-reactive polymer (polymer having carbon-carbon double bond introduced into its side chain) obtained in Example 1 were mixed with 1 part by weight of a polyisocyanate-based crosslinking agent, 3 parts by weight of an acetophenone-based photopolymerization initiator and 30 parts by weight of a radiation-curing bifunctional urethane acrylate to prepare an adhesive composition. The subsequent procedures were the same as in Example 1.

EXAMPLE 7

The procedure of Example 1 was followed except that a soft vinyl chloride film (thickness: 50 μm) was used instead of polyester substrate film to obtain an adhesive sheet for wafer dicing. The adhesive sheet thus obtained was laminated with a wafer, subjected to dicing and expansion under the above-described conditions, and then measured for width of dicing street.

COMPARATIVE EXAMPLE 1

A blend composition comprising 0.59 mols of ethyl acrylate, 0.59 mols of butyl acrylate and 0.26 mols of vinyl acetate was copolymerized in a toluene solution to obtain an acrylic copolymer having a number average molecular weight of 300,000. The copolymer thus obtained was then saponified by an ordinary method to obtain a polymer having the acetyloxy group substituted by hydroxyl group. 0.21 mols of acrylic acid were added to the polymer thus obtained. The polymer was then subjected to condensation reaction in the presence of an acid catalyst to introduce carbon-carbon double bond into the side chain in the polymer molecule. The resulting side chain had a length of 4 in terms of number of atoms. The subsequent procedures were the same as in Example 1.

COMPARATIVE EXAMPLE 2

A blend composition comprising 0.59 mols of ethyl acrylate, 0.59 mols of butyl acrylate and 0.26 mols of 2-hydroxyethyl acrylate was copolymerized in a toluene solution to obtain an acrylic copolymerized polymer having a

number average molecular weight of 300,000. Subsequently, the copolymer thus obtained was mixed with 1 part by weight of a polyisocyanate-based crosslinking agent, 3 parts by weight of an acetophenone-based photopolymerization initiator and 30 parts by weight of a radiation-curing bifunctional urethane acrylate to prepare an adhesive composition. The subsequent procedures were the same as in Example 1.

COMPARATIVE EXAMPLE 3

An adhesive composition was prepared in the same manner as in Comparative Example 2 except that the amount of the radiation-curing bifunctional urethane acrylate added was 100 parts by weight. The subsequent procedures were the same as in Comparative Example 2.

COMPARATIVE EXAMPLE 4

The procedure of Comparative Example 3 was followed except that a soft vinyl chloride film (thickness: 50 μm) was used instead of polyester substrate film to obtain an adhesive sheet for wafer dicing. The adhesive sheet thus obtained was laminated with a wafer, subjected to dicing and expansion under the above-described conditions, and then measured for width of dicing street.

The results obtained in the Examples and Comprative Examples are shown in the Table below.

Table

| Example No. | Shrinkage force of adhesive layer (MPa) | Warpage of wafer (mm) | | Adhesion (gf/25 mm) | | Distance between dicing streets (μm) |
|---|---|---|---|---|---|---|
| | | Shortly after grinding | After irradiation with UV | Shortly before irradiation with UV | After irradiation with UV | |
| Example 1 | 3 | 1.9 | 2.2 | 530 | 10 | - |
| Example 2 | 1 | 1.9 | 2.1 | 600 | 8 | - |
| Example 3 | 4 | 1.9 | 2.2 | 550 | 8 | - |
| Example 4 | 8 | 2.0 | 2.3 | 720 | 9 | - |
| Example 5 | 13 | 1.9 | 2.1 | 820 | 10 | - |
| Example 6 | 5 | 1.9 | 2.3 | 590 | 8 | - |
| Example 7 | 3 | - | - | 500 | 8 | 200 |
| Comparative Example 1 | 32 | 1.9 | 4.5 | 450 | 9 | - |
| Comparative Example 2 | 4 | 2.0 | 2.2 | 1,000 | 350 | - |
| Comparative Example 3 | 35 | 1.9 | 4.3 | 700 | 9 | - |
| Comparative Example 4 | 35 | - | - | 630 | 8 | 75 |

As can be seen from the above Table, when irradiated with ultraviolet rays, Examples 1 to 6 show a drop of adhesion to an extent great enough for re-release and a shrinkage force as small as 30 MPa or less as developed by curing, causing the wafer to be little warped. On the contrary, when cured by irradiation with ultraviolet rays, Comparative Examples 1 and 3 show a shrinkage force of more than 30 MPa, causing the wafer to be drastically warped when irradiated with ultraviolet rays. As shown in Comparative Example 2, when the shrinkage force of an adhesive comprising a polymer free of carbon-carbon double bond in its molecular and a radiation-reactive oligomer in combination is lowered by reducing the content of the radiation-reactive oligomer, the warpage of the wafer can be reduced, but the adhesion cannot be sufficiently lowered even when irradiated with ultraviolet rays.

Further, when irradiated with ultraviolet rays, Example 7 shows a sufficient drop of adhesion. Moreover, the adhesive layer is maintained flexible even when cured by irradiation with ultraviolet rays. Thus, when the adhesive sheet of Example 7 is expanded, the width of the dicing street can be expanded to an extent such that chips can be smoothly

picked up. On the contrary, when irradiated with ultraviolet rays, Comparative Example 4 shows a sufficient drop of adhesion. However, when the adhesive sheet of Comparative Example 4 is expanded, the width of the dicing street is too small to pick up chips smoothly.

## Claims

1. A re-release type adhesive comprising a radiation-reactive polymer having a side chain having a chain length of 6 or more in terms of number of atoms and one carbon-carbon double bond per side chain, said re-release type adhesive showing a shrinkage force of 30 MPa or less as developed by curing reaction caused by irradiation with radiation.

2. The re-release type adhesive as claimed in claim 1, which further comprises a radiation-reactive oligomer in an amount of 0.1 to 150 parts by weight per 100 parts by weight of said radiation-reactive polymer.

3. A re-release type adhesive sheet comprising a substrate film and an adhesive layer comprising a re-release type adhesive, provided on one surface of the substrate film, said re-release type adhesive comprising a radiation-reactive polymer having a side chain having a chain length of 6 or more in terms of number of atoms and one carbon-carbon double bond per side chain, and said re-release type adhesive showing a shrinkage force of 30 MPa or less as developed by curing reaction caused by irradiation with radiation.

## Patentansprüche

1. Wiederablösbarer Klebstoff, umfassend ein strahlungsreaktives Polymer mit einer Seitenkette mit einer Kettenlänge von 6 oder mehr bezogen auf die Anzahl der Atome und einer Kohlenstoff-Kohlenstoff Doppelbindung pro Seitenkette, wobei der genannte wiederablösbare Klebstoff eine Schrumpfkraft von 30 MPa oder weniger, wie durch Aushärtungsreaktion verursacht durch Bestrahlung mit Strahlung entwickelt, aufweist.

2. Wiederablösbarer Klebstoff wie in Anspruch 1 beansprucht, welcher weiterhin ein strahlungsreaktives Oligomer in einer Menge von 0,1 bis 150 Gewichtsteilen pro 100 Gewichtsteilen des genannten strahlungsreaktiven Polymers umfasst.

3. Wiederablösbare Klebstofffolie, umfassend einen Substratfilm und eine Klebstoffschicht, umfassend einen wiederablösbaren Klebstoff, der auf einer Oberfläche des Substratfilms aufgebracht ist, wobei der genannte wiederablösbare Klebstoff ein strahlungsreaktives Polymer mit einer Seitenkette mit einer Kettenlänge von 6 oder mehr bezogen auf die Anzahl der Atome und eine Kohlenstoff-Kohlenstoff Doppelbindung pro Seitenkette umfasst, und der genannte wiederablösbare Klebstoff eine Schrumpfkraft von 30 MPa oder weniger, wie durch Aushärtungsreaktion verursacht durch Bestrahlung mit Strahlung entwickelt, aufweist.

## Revendications

1. Adhésif de type à redécollement comprenant un polymère réactif par rayonnement ayant une chaîne latérale ayant une longueur de chaîne de 6 ou plus en termes de nombre d'atomes et une double liaison carbone-carbone par chaîne latérale, ledit adhésif de type à redécollement présentant une force de retrait de 30 MPa ou moins telle qu'elle est développée par une réaction de durcissement causée par irradiation avec un rayonnement.

2. Adhésif de type à redécollement selon la revendication 1 qui comprend en outre un oligomère réactif par rayonnement en une quantité de 0,1 à 150 parties en poids pour 100 parties en poids dudit polymère réactif par rayonnement.

3. Feuille adhésive de type à redécollement comprenant un film de substrat et une couche adhésive comprenant un adhésif de type à redécollement, disposée sur une surface du film de substrat, ledit adhésif de type à redécollement comprenant un polymère réactif par rayonnement ayant une chaîne latérale ayant une longueur de chaîne de 6 ou plus en termes de nombre d'atomes et une double liaison carbone-carbone par chaîne latérale, ledit adhésif de type à redécollement présentant une force de retrait de 30 MPa ou moins telle qu'elle est développée par une réaction de durcissement causée par irradiation avec un rayonnement.

FIG. 1

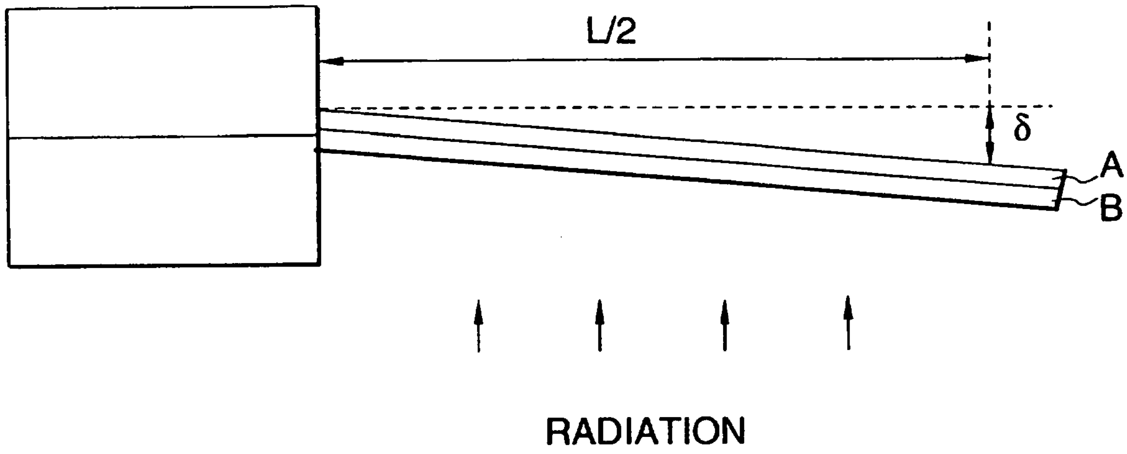


FIG. 2

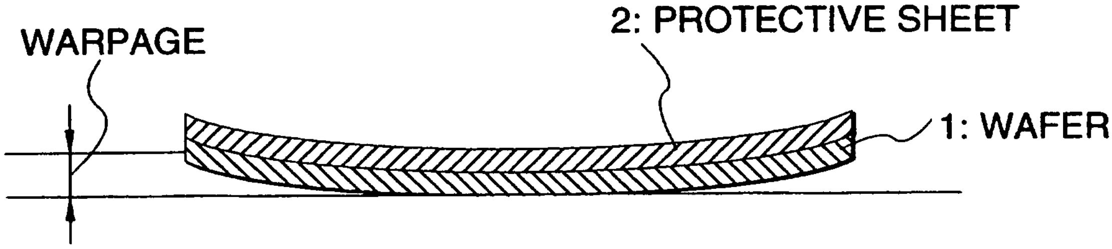

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5032946 A
- JP 8020756 A
- JP 9186121 A
- JP 9298173 A
- JP 11026406 A
- US 5149586 A